(19) Europäisches Patentamt
European Patent Office
Office européen des brevets

(11) **EP 3 602 726 B1**

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(21) Anmeldenummer: **18713195.8**

(22) Anmeldetag: **21.03.2018**

(51) Int Cl.:
**H02J 7/00** *(2006.01)*

(86) Internationale Anmeldenummer:
**PCT/EP2018/057182**

(87) Internationale Veröffentlichungsnummer:
**WO 2018/177845 (04.10.2018 Gazette 2018/40)**

(54) **GERÄT MIT ELEKTRISCHEM VERBRAUCHER**

DEVICE WITH ELECTRIC LOAD

APPAREIL ÉQUIPÉ D'UN CONSOMMATEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2017 DE 102017106836**

(43) Veröffentlichungstag der Anmeldung:
**05.02.2020 Patentblatt 2020/06**

(73) Patentinhaber: **Endress+Hauser Flowtec AG
4153 Reinach (CH)**

(72) Erfinder:
• **SIMON, Antoine
68300 St. Louis (FR)**
• **RÜFENACHT, Markus
4442 Diepflingen (CH)**
• **WICKI, Ronald
4226 Breitenbach (CH)**

(74) Vertreter: **Andres, Angelika Maria
Endress+Hauser Group Services
(Deutschland) AG+Co. KG
Colmarer Straße 6
79576 Weil am Rhein (DE)**

(56) Entgegenhaltungen:
**DE-A1-102010 003 995     DE-A1-102012 208 349**

**Beschreibung**

Die Erfindung betrifft ein Gerät mit einem elektrischen Verbraucher und einem austauschbaren elektrischen Energiespeicher.

Geräte gemäß dem Stand der Technik, welche mit einem Energiespeicher betrieben und bei kritischen Anwendungen eingesetzt werden, benötigen ein Maß für einen Ladezustand des Energiespeichers, damit der Energiespeicher vor völliger Entleerung ausgetauscht werden kann, damit die Anwendung nicht beeinträchtigt wird.

Beispielsweise kann ein solches Gerät ein batteriebetriebenes Durchflussmessgerät, und insbesondere ein batteriebetriebenes magnetisch-induktives Durchflussmessgerät sein, siehe beispielsweise die Schrift DE 102015103580 A1.

Das Maß für den Ladezustand ist dabei beispielsweise die Ladespannung des Energiespeichers. Bei Energiespeichern, bei welchen die Ladespannung über weite Ladezustandsbereiche im Rahmen einer Messgenauigkeit der Ladespannung fast konstant ist, werden Coulombzähler zur Messung der verbrauchten Energie eingesetzt, um eine ausreichende Messgenauigkeit des Ladezustands zu erreichen.

Jedoch ist das Messen der Ladespannung oder das Messen der verbrauchten Energie selbst mit einem gewissen Energieverbrauch verbunden, was bei Geräten mit geringem Energieverbrauch eine störende Senkung einer Lebensdauer des Energiespeichers zur Folge hat.

Darüber hinaus ist die Abschätzung einer Restlebensdauer des Energiespeichers aufgrund von Messfehlern der Ladespannung bzw. von Messfehlern der bereits verbrauchten Energie selbst mit großen Unsicherheiten behaftet. Dazu kommt, dass bei Coulombzählern zur Abschätzung der Restlebensdauer eine Anfangsenergiemenge des Energiespeichers bekannt sein muss, wobei die Anfangsenergiemenge aufgrund von fertigungsbedingten Unsicherheiten selbst eine nur ungenau bekannte Größe ist. Dokument DE102010003995A1 zeigt ein Gerät gemäß dem Oberbegriff von Anspruch 1.

Aufgabe der Erfindung ist es daher, ein Gerät mit einem austauschbaren Energiespeicher vorzuschlagen, bei welchem die genannten Nachteile zumindest gemindert sind.

Die Aufgabe wird gelöst durch ein erfindungsgemäßes Gerät gemäß dem unabhängigen Anspruch 1.

Ein erfindungsgemäßes Gerät umfasst mindestens einen elektrischen Verbraucher; mindestens einen austauschbaren elektrischen Energiespeicher; eine elektronische Mess-/Betriebsschaltung zum Betreiben des Verbrauchers sowie zum Steuern einer Energieverwaltung des elektronischen Geräts, wobei der Energiespeicher zumindest eine erste Speichereinheit mit einer ersten anfänglichen Energiemenge und zumindest eine zweite Speichereinheit mit einer zweiten anfänglichen Energiemenge aufweist, wobei die elektronische Mess-/Betriebsschaltung dazu eingerichtet ist, die erste Speichereinheit oder die zweite Speichereinheit nach einem Algorithmus anzusteuern, wobei durch Ansteuerung der ersten bzw. zweiten Speichereinheit eine Energieversorgung des Geräts durch die jeweilige Speichereinheit sichergestellt ist, wobei die elektronische Mess-/Betriebsschaltung dazu eingerichtet ist, durch Ansteuern der ersten Speichereinheit bzw. der zweiten Speichereinheit sicherzustellen, dass bei einer geringen Restenergiemenge oder aufgebrauchter Energiemenge einer Speichereinheit die jeweils andere Speichereinheit eine Restenergiemenge von zumindest 10% und insbesondere mindestens 20% und bevorzugt mindestens 30% einer Gesamtenergiemenge der ersten anfänglichen Energiemenge der ersten Speichereinheit und der zweiten anfänglichen Energiemenge der zweiten Speichereinheit aufweist.

Durch das Einrichten von mindestens zwei Speichereinheiten und das Ansteuern der Speichereinheiten nach einem Algorithmus, welcher gewährleistet, dass bei aufgebrauchter Energiemenge einer Speichereinheit die mindestens eine andere Speichereinheit zumindest 10% der Gesamtenergiemenge aufweist, kann eine fehleranfällige Bemessung des Ladezustands des Energiespeichers mittels Ladespannungsmessung bzw. Energieverbrauchsmessung per Coulombzähler vermieden werden. Darüber hinaus steigt eine Gesamtlebensdauer des Energiespeichers aufgrund der Vermeidung des Betriebs einer Ladezustandsmessung. Dies ist insbesondere wichtig bei Geräte mit geringem Verbrauch und langer Laufzeit.

Ohne Beschränkung der Allgemeinheit können erfindungsgemäße Geräte beispielsweise Feldgeräte der industriellen Prozess-, Mess- und Automatisierungstechnik, Geräte der Umweltmesstechnik, der Labormesstechnik, der Verkehrsüberwachungstechnik, der Medizintechnik, insbesondere Implantate, der Gebäudeautomatisierungstechnik oder der Kommunikationstechnik sein.

Erfindungsgemäße Geräte weisen insbesondere eine Leistungsaufnahme auf, die bei gegebener Gesamtenergiemenge eine Betriebsdauer ohne Energiespeicherwechsel von nicht weniger als 1 Monat, und insbesondere nicht weniger als 6 Monate und beispielsweise nicht weniger als 2 Jahre beträgt.

Die mittlere Leistungsaufnahme ist dabei mindestens 0.2 mW, und insbesondere mindestens 2 mW und beispielsweise mindestens 20 mW, und/oder höchstens 1 Watt, und insbesondere höchstens 250 mW und beispielsweise höchstens 100 mW.

In einer Ausgestaltung ist die elektronische Mess-/Betriebsschaltung dazu eingerichtet, ein Warnsignal auszugeben sobald die Restenergiemenge einer Speichereinheit gering ist bzw. sobald die anfängliche Energiemenge einer Speichereinheit aufgebraucht ist, wobei die elektronische Mess-/Betriebsschaltung bei geringer Restenergiemenge bzw. aufgebrauchter Energiemenge einer Speichereinheit dazu eingerichtet ist, die Energieversorgung des Geräts durch durchgängige Verwendung der jeweils anderen Speichereinheit sicherzustellen.

Durch Ausgabe eines Warnsignals und durchgängige Verwendung der Speichereinheit mit einer nicht vollständig aufgebrauchten Energiemenge bleibt einem Anwender des Geräts genug Zeit, um sich um den Austausch des Energiespeichers zu kümmern.

In einer Ausgestaltung ist der Typ des Energiespeichers ein Typ aus folgender Liste:

Akkumulator, Primärbatterie,

wobei die Primärbatterie insbesondere eine Alkaliprimärbatterie und bevorzugt eine Lithiumprimärbatterie ist.

Insbesondere Alkaliprimärbatterien weisen eine vom Ladezustand weitgehend unabhängige Ladespannung auf, so dass bei Verwendung von Alkaliprimärbatterien nachteilhafte Coulombzähler für eine Ladezustandsüberwachung zum Einsatz kommen.

Die weitgehende Unabhängigkeit der Ladespannung vom Ladezustand ist jedoch von besonderem Vorteil für den Einsatz von Geräten mit elektrischem Verbraucher, da somit ein stabiler Betrieb der Geräte sichergestellt ist.

In einer Ausgestaltung umfassen die erste Speichereinheit und die zweite Speichereinheit jeweils einen oder mehrere Speicherelemente eines gleichen Typs.

Auf diese Art und Weise lässt sich ein Energiespeicher auf günstige und einfache Art und Weise zusammensetzen. Darüber kann bei Speicherelementen gleichen Typs davon ausgegangen werden, dass ein Entladeverhalten sowie eine anfängliche Energiemenge ähnlich sind. Ein Speicherelement kann beispielsweise eine Lithiumprimärbatterie mit einer anfänglichen Energiemenge von X Wattstunden sein. Bei einer ersten Speichereinheit mit a Speicherelementen und einer zweiten Speichereinheit mit b Speicherelementen weist ein Energiespeicher somit eine anfängliche Gesamtenergiemenge von (a+b)*X Wattstunden auf, wobei a und b natürliche Zahlen und X eine reelle Zahl größer Null ist.

a sowie b sind kleiner 20, und insbesondere kleiner 10 und bevorzugt kleiner 5.

X ist größer 2 Wh, und insbesondere größer 5 Wh und bevorzugt größer 10 Wh und/oder kleiner 1000 Wh, und insbesondere kleiner 200 Wh und bevorzugt kleiner 30 Wh.

In einer Ausgestaltung sind die erste Speichereinheit und die zweite Speichereinheit des Energiespeichers räumlich zu einem Speichermodul zusammengefasst.

Dadurch ist sichergestellt, dass eine Alterung der Speicherelemente aufgrund gleicher Bedingungen auf eine ähnliche Art und Weise verläuft. Dies ist vorteilhaft während des Betriebs des Geräts und auch bei einer Lagerung des Energiespeichers vor endgültiger Fertigung des Geräts.

In einer Ausgestaltung umfasst der Algorithmus mindestens eine erste Zeitdauer zur Ansteuerung der ersten Speichereinheit und mindestens eine zweite Zeitdauer zur Ansteuerung der zweiten Speichereinheit. Auf diese Weise können die Speichereinheiten so angesteuert werden, dass bei vollständiger Entleerung einer Speichereinheit, die mindestens eine andere Speichereinheit eine ausreichend große Restenergiemenge aufweist, um einen rechtzeitigen Austausch des Energiespeichers zu ermöglichen.

In einer Ausgestaltung ist die erste Zeitdauer sowie die zweite Zeitdauer größer als 100 Millisekunden insbesondere größer als 1 Minute und bevorzugt größer als 1 Stunde sind und/oder wobei die erste Zeitdauer sowie die zweite Zeitdauer kleiner als 3 Monate und insbesondere kleiner als 1 Monate und bevorzugt kleiner als 1 Woche.

In einer Ausgestaltung ist die erste Zeitdauer sowie die zweite Zeitdauer größer 0.001 % und insbesondere größer als 0.005 % und bevorzugt größer als 0.02% einer Gesamtlebensdauer des Energiespeichers sind und/oder wobei die erste Zeitdauer sowie die zweite Zeitdauer kleiner als 10 % und insbesondere kleiner als 5% und bevorzugt kleiner als 2% der Gesamtlebensdauer ist.

Durch eine Mindestdauer der ersten bzw. zweiten Zeitdauer lassen sich Störeffekte des Schaltens und ein möglicher zusätzlicher Energieverbrauch durch das Schalten mindern.

Durch eine Höchstdauer der ersten bzw. zweiten Zeitdauer kann eine vollständige Entleerung einer Speichereinheit vor Ablauf einer ersten bzw. zweiten Zeitdauer vermieden werden.

Die erste bzw. die zweite Zeitdauer muss nicht notwendigerweise konstant sein, sonder kann beispielsweise von einem Belastungszustand des Geräts abhängig sein. So kann bei hoher Belastung die erste bzw. die zweite Zeitdauer kürzer ausgestaltet sein.

In einer Ausgestaltung ist ein erstes Verhältnis $V1=E1/E2$ der ersten anfänglichen Energiemenge zur zweiten anfänglichen Energiemenge größer oder gleich 1,

und wobei für ein zweites Verhältnis $V2=t1/t2$ der ersten Zeitdauer zur zweiten Zeitdauer gilt: $V2=V1*F$ mit

entweder F kleiner 1 und insbesondere kleiner 0.9 und bevorzugt kleiner 0.8,

oder F größer 1 und insbesondere größer 1.1 und bevorzugt größer 1.2,

wobei die elektronische Mess-/Betriebsschaltung dazu eingerichtet ist, die erste Speichereinheit und die zweite Speichereinheit abwechselnd anzusteuern.

Hiermit wird sichergestellt, dass die erste Speichereinheit sowie die zweite Speichereinheit derart asymmetrisch angesteuert werden, dass entweder die erste Speichereinheit oder die zweite Speichereinheit zuerst entleert ist. Mit F größer 1 wird die erste Speichereinheit zuerst entleert, mit F kleiner 1 die zweite Speichereinheit.

In einer Ausgestaltung ist ein erstes Verhältnis V1=E1/E2 der ersten anfänglichen Energiemenge zur zweiten anfänglichen Energiemenge größer oder gleich 1,

wobei die elektronische Mess-/Betriebsschaltung dazu eingerichtet ist, die Abfolge der Ansteuerung der ersten Speichereinheit sowie der zweiten Speichereinheit im Wesentlichen zufällig auszugestalten,

wobei die Ansteuerung der ersten Speichereinheit eine durchschnittliche erste Ansteuerungszeit aufweist, und wobei die Ansteuerung der zweiten Speichereinheit eine durchschnittliche zweite Ansteuerungszeit aufweist,

wobei für ein drittes Verhältnis V3 der durchschnittlichen ersten Ansteuerungszeit zur durchschnittlichen zweiten Ansteuerungszeit gilt: V3=V1*F mit

entweder F kleiner 1 und insbesondere kleiner 0.9 und bevorzugt kleiner 0.8,

oder F größer 1 und insbesondere größer 1.1 und bevorzugt größer 1.2.

Hiermit wird sichergestellt, dass die erste Speichereinheit sowie die zweite Speichereinheit derart asymmetrisch angesteuert werden, dass entweder die erste Speichereinheit oder die zweite Speichereinheit zuerst entleert ist. Mit F größer 1 wird die erste Speichereinheit zuerst entleert, mit F kleiner 1 die zweite Speichereinheit.

In einer Ausgestaltung ist das Gerät ein Feldgerät der Mess- und Automatisierungstechnik, wobei der mindestens eine elektrische Verbraucher ein Sensor zum Erfassen mindestens einer Messgröße ist, wobei das Gerät des Weiteren umfasst:

ein Gehäuse mit mindestens einer Gehäusekammer, wobei der Energiespeicher sowie die elektronische Mess-/Betriebsschaltung in der Gehäusekammer angeordnet sind,

wobei die elektronische Mess-/Betriebsschaltung zum Betreiben des Sensors sowie zur Verarbeitung eines vom Sensor ausgegebenen, die Messgröße repräsentierendes Messsignals eingerichtet ist.

Mit erfindungsgemäßen Feldgeräten sind beispielsweise folgende Größen messbar: Durchfluss, Füllstand, Grenzstand, Druck, Leitfähigkeit, pH-Wert, Temperatur.

In einer Ausgestaltung ist das Gerät ein Durchflussmessgerät zur Messung der Durchflussgeschwindigkeit oder des Volumen- bzw. Massedurchflusses eines Mediums in einem Messrohr nach einem der folgenden Messprinzipien:

Magnetisch-induktiv, Thermisch, Ultraschalllaufzeitdifferenz, Ultraschalldoppler, Coriolis, Vortex, Druckdifferenz,

wobei das Gerät das Messrohr zum Führen des Mediums umfasst.

In einer Ausgestaltung umfasst das magnetisch-induktive Durchflussmessgerät ein Magnetsystem mit mindestens einem Spulensystem zum Erzeugen eines Magnetfelds, welches im Wesentlichen senkrecht zu einer Messrohrachse steht;

mindestens ein Paar im oder am Messrohr angeordnete Messelektroden, welche galvanisch oder kapazitiv mit dem Medium gekoppelt sind, wobei das Paar Messelektroden dazu eingerichtet ist, eine vom Magnetfeld im Medium induzierte durchflussabhängige elektrische Spannung abzugreifen;

wobei das Magnetsystem und die Messelektroden mit der Mess-/Betriebsschaltung elektronisch gekoppelt sind,

wobei die Mess-/Betriebsschaltung dazu eingerichtet ist, das Magnetsystem und die Messelektroden zu betreiben und die durch das Paar Messelektroden abgegriffene, den Durchfluss repräsentierende elektrische Spannung auszuwerten.

In einer Ausgestaltung ist die Mess-/Betriebsschaltung dazu eingerichtet, das Medium für eine Durchflussmessung mit mindestens zwei aufeinanderfolgenden Magnetfeldern wechselnder Polarität zu beaufschlagen.

Im Folgenden wird die Erfindung anhand von Ausführungsbeispielen beschrieben.

Fig. 1 skizziert ein schematisches Gerät mit einem erfindungsgemäßen Energiespeicher.

Fig. 2 skizziert den Aufbau einer beispielhaften, erfindungsgemäßen Ausgestaltung des Energiespeichers.

Fig. 3 zeigt einen schematischen Querschnitt durch ein erfindungsgemäßes magnetisch-induktives Durchflussmessgerät mit einem erfindungsgemäßen Energiespeicher.

Fig. 4 zeigt einen Ausschnitt aus einem beispielhaften erfindungsgemäßen zeitlichen Verlauf einer Ansteuerung einer ersten Speichereinheit sowie einer zweiten Speichereinheit eines erfindungsgemäßen Energiespeichers.

Fig. 5 beschreibt einen beispielhaften Verlauf einer Restenergiemenge eines Energiespeichers.

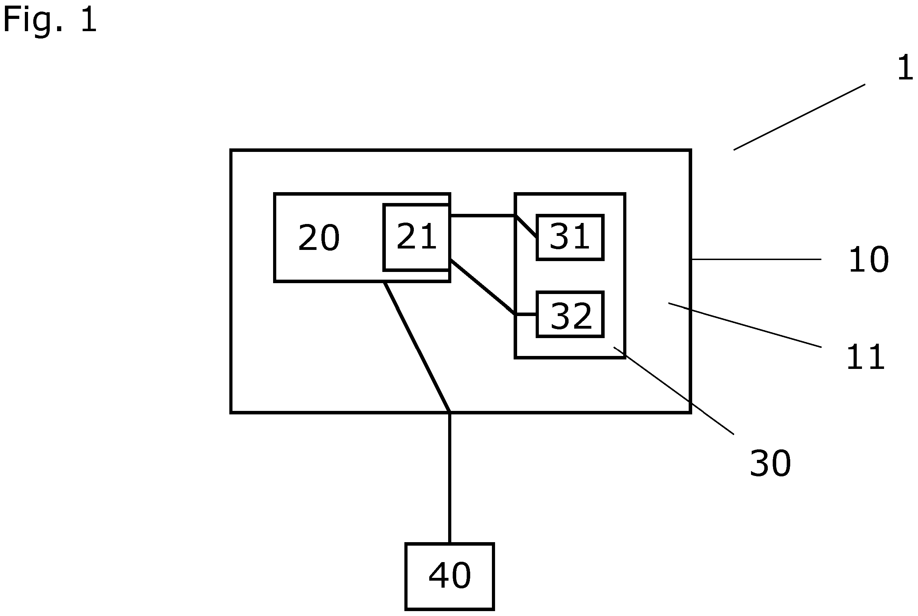

Fig. 1 skizziert ein beispielhaftes erfindungsgemäßes Gerät umfassend einen erfindungsgemäßen Energiespeicher 30 mit einer erste Speichereinheit 31 und einer zweite Speichereinheit 32; ein Gehäuse 10 mit einer Gehäusekammer 11; eine elektronische Mess-/Betriebsschaltung 20 mit einem Schalter 21 und einen elektrischen Verbraucher bzw. Sensor 40. Der Energiespeicher 30 sowie die elektronische Mess-/Betriebsschaltung 20 sind in der Gehäusekammer des Gehäuses angeordnet und somit vor äußeren Einflüssen geschützt. Der Sensor 40 des Geräts ist außerhalb des Gehäuses angeordnet. In einer alternativen Ausgestaltung kann der elektrische Verbraucher bzw. Sensor auch innerhalb des Gehäuses angeordnet sein. Die elektronische Mess-/Betriebsschaltung 20 ist dabei durch elektrische Verbindungen mit dem Sensor 40 sowie dem Energiespeicher 30 bzw. mit den Speichereinheiten des Energiespeichers verbunden.

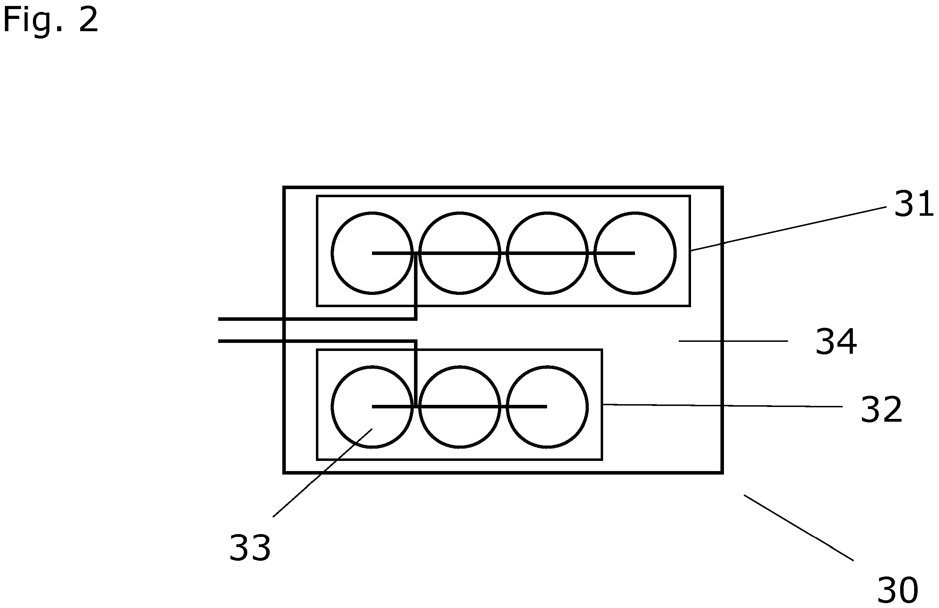

Fig. 2 skizziert einen beispielhaften erfindungsgemäßen Energiespeicher 30 mit einer ersten Speichereinheit 31 und einer zweiten Speichereinheit 32, welche Speichereinheiten räumlich zu einem Speichermodul 34 zusammengefasst sind. Die Speichereinheiten sind aus Speicherelementen 33 zusammengesetzt, wobei die Speicherelemente beispielsweise Akkumulatoren oder Primärbatterien sind, wobei die Primärbatterien bevorzugt Alkaliprimärbatterien und insbesondere Lithiumprimärbatterien sind. Die Speicherelemente 33 der Speichereinheiten sind bevorzugt gleichen Typs. Ein Typ einer Speichereinheit weist eine Nennenergiemenge und eine Nennausgangsspannung auf. Insbesondere ist ein Typ des Weiteren ein Energiespeicherprodukt eines bestimmten Herstellers. Und insbesondere bevorzugt ist ein Typ des Weiteren ein Energiespeicherprodukt eines Herstellers aus einer Fabrikationscharge.

Speicherelemente 33 einer Speichereinheit sind durch ein elektrisches Zusammenfassen gekennzeichnet, was durch eine verbindende Linie dargestellt ist. Das elektrische Zusammenfassen kann durch ein paralleles und/oder serielles Verschalten der Speicherelemente gegeben sein. Jede Speichereinheit ist über eine elektrische Verbindung über den Schalter 21 der elektronischen Mess-/Betriebsschaltung mit der elektronischen Mess-/Betriebsschaltung verbindbar. Durch ein Herstellen der Verbindung zwischen einem Speicherelement und der elektronischen Mess-/Betriebsschaltung 20 lässt sich die Energieversorgung des Geräts 1 sicherstellen. Das räumliche Zusammenfassen der Speichereinheiten zu einem Modul hat den Vorteil, dass die Speicherelemente ähnlichen Umweltbedingungen unterliegen und deren Alterungsprozess somit ähnlich verläuft. Dadurch erhöht sich die Stabilität des Energiespeichers hinsichtlich Ladespannung und Leistungsabgabe.

Die skizzierte geometrische Anordnung der Speichereinheiten sowie der Speicherelemente 33 der Speichereinheiten und deren Anzahl pro Speichereinheit ist rein anschaulicher Natur und nicht zu einer Einschränkung des erfinderischen Gedankens heranzuziehen. Beispielsweise kann die Anzahl der Speicherelemente 33 pro Speichereinheit mindestens 1 und kleiner 10 sein.

Bei erstmaliger Inbetriebnahme des Geräts mit einem neuen, unverbrauchten Energiespeicher weist die erste Speichereinheit eine erste anfängliche Energiemenge E1 und die zweite Speichereinheit eine zweite anfängliche Energiemenge E2 auf.

In einer Ausgestaltung ist ein erfindungsgemäßer Energiespeicher nicht auf eine erste Speichereinheit und eine zweite Speichereinheit beschränkt. Ein Energiespeicher kann auch weitere Speichereinheiten umfassen, welche entsprechend der ersten bzw. der zweiten Energiespeichereinheit angesteuert werden..

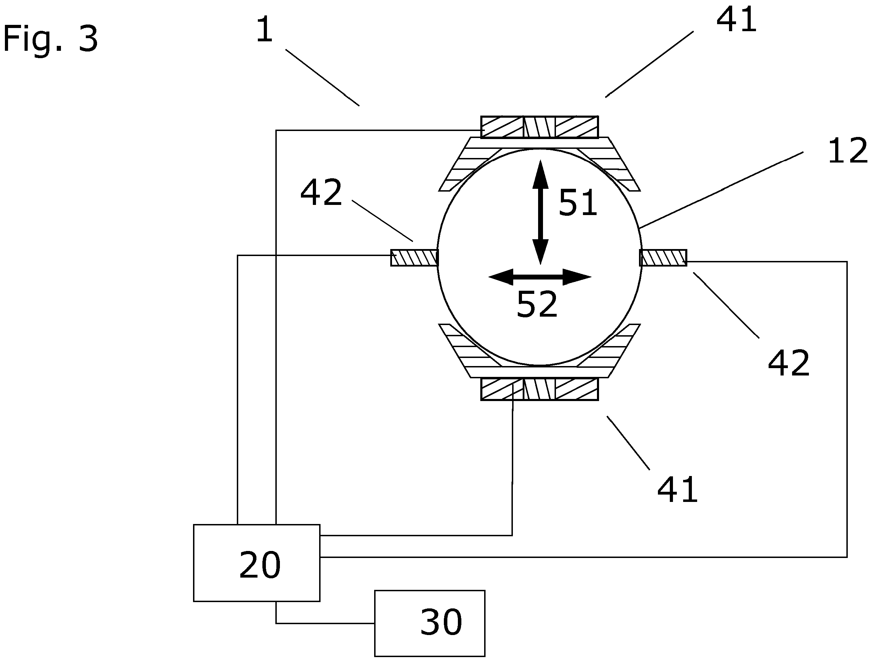

Fig. 3 skizziert einen Querschnitt durch ein magnetisch-induktives Durchflussmessgerät umfassend einen erfindungsgemäßen Energiespeicher 30, wobei das magnetisch-induktive Durchflussmessgerät des Weiteren umfasst: Ein Messrohr 12 zum Führen eines Mediums, ein Magnetsystem mit zwei Spulensystemen 42, ein Paar Messelektroden 42 und eine elektronische Mess-/Betriebsschaltung 20 zum Betreiben des Magnetsystems, der Messelektroden 42 sowie zum Ansteuern des Energiespeichers 30. Durch Anlegen einer Spulenspannung an die Spulensysteme 42 wird ein Magnetfeld erzeugt, welches im Wesentlichen senkrecht zu einer Messrohrachse steht. Im durch das Messrohr 12 strömenden Medium wird eine elektrische Spannung senkrecht zum Magnetfeld und senkrecht zur Strömungsrichtung induziert, welche durch die Messelektroden aufgegriffen wird, wobei die elektrische Spannung abhängig vom Durchfluss des Mediums sowie vom Magnetfeld ist. Die elektronische Mess-/Betriebsschaltung ist dazu eingerichtet, auf Basis der gemessenen elektrischen Spannung Durchflussmesswerte zu berechnen.Der Energiespeicher eines magnetisch-induktiven Durchflussmessgeräts kann beispielsweise insgesamt zwei oder drei Speicherelemente aufweisen, wobei die Kapazität eines Speicherelements beispielsweise zwischen 50 Wh und 100 Wh ist.

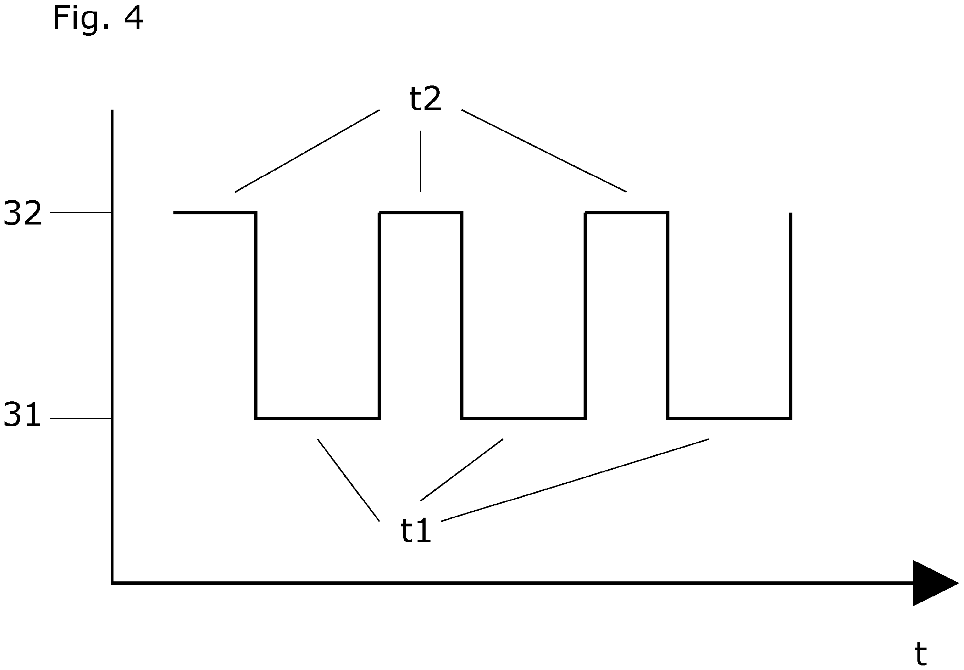

Fig. 4 zeigt einen Ausschnitt aus einem zeitlichen Verlauf einer Ansteuerung der ersten Speichereinheit 31 und der zweiten Speichereinheit 32, wobei die Dauer einer Ansteuerung der ersten Speichereinheit bzw. zweiten Speichereinheit eine erste Zeitdauer t1 bzw. eine zweite Zeitdauer t2 ist. Das in der Fig. 4 dargestellte Verhältnis der Zeitdauern ist beispielhaft, beispielsweise kann die Zeitdauer t2 auch größer als die oder gleich der Zeitdauer t1 sein.

In einer Ausgestaltung, bei welcher ein erstes Verhältnis $V1=E1/E2$ der ersten anfänglichen Energiemenge zur zweiten anfänglichen Energiemenge größer oder gleich 1 ist und wobei für ein zweites Verhältnis $V2=t1/t2$ der ersten Zeitdauer zur zweiten Zeitdauer gilt: $V2=V1*F$ mit entweder F kleiner 1 und insbesondere kleiner 0.9 und bevorzugt kleiner 0.8, oder F größer 1 und insbesondere größer 1.1 und bevorzugt größer 1.2, wird sichergestellt, dass die erste Speichereinheit sowie die zweite Speichereinheit derart asymmetrisch angesteuert werden, so dass entweder die erste Speichereinheit oder die zweite Speichereinheit zuerst entleert ist. Mit F größer 1 wird die erste Speichereinheit zuerst entleert, mit F kleiner 1 die zweite Speichereinheit.

In einer weiteren Ausgestaltung, bei welcher ein erstes Verhältnis $V1=E1/E2$ der ersten anfänglichen Energiemenge zur zweiten anfänglichen Energiemenge größer oder gleich 1 ist, können Zeitdauern der Ansteuerung der Speichereinheiten variabel und zufällig ausgestaltet sein, wobei die Ansteuerung der ersten Speichereinheit eine durchschnittliche erste Ansteuerungszeit aufweist, und wobei die Ansteuerung der zweiten Speichereinheit eine durchschnittliche zweite Ansteuerungszeit aufweist,

wobei für ein drittes Verhältnis V3 der durchschnittlichen ersten Ansteuerungszeit zur durchschnittlichen zweiten Ansteuerungszeit gilt: V3=V1*F mit

entweder F kleiner 1 und insbesondere kleiner 0.9 und bevorzugt kleiner 0.8,

oder F größer 1 und insbesondere größer 1.1 und bevorzugt größer 1.2.

Auch hiermit wird sichergestellt, dass die erste Speichereinheit sowie die zweite Speichereinheit derart asymmetrisch angesteuert werden, dass entweder die erste Speichereinheit oder die zweite Speichereinheit zuerst entleert ist. Mit F größer 1 wird die erste Speichereinheit zuerst entleert, mit F kleiner 1 die zweite Speichereinheit.

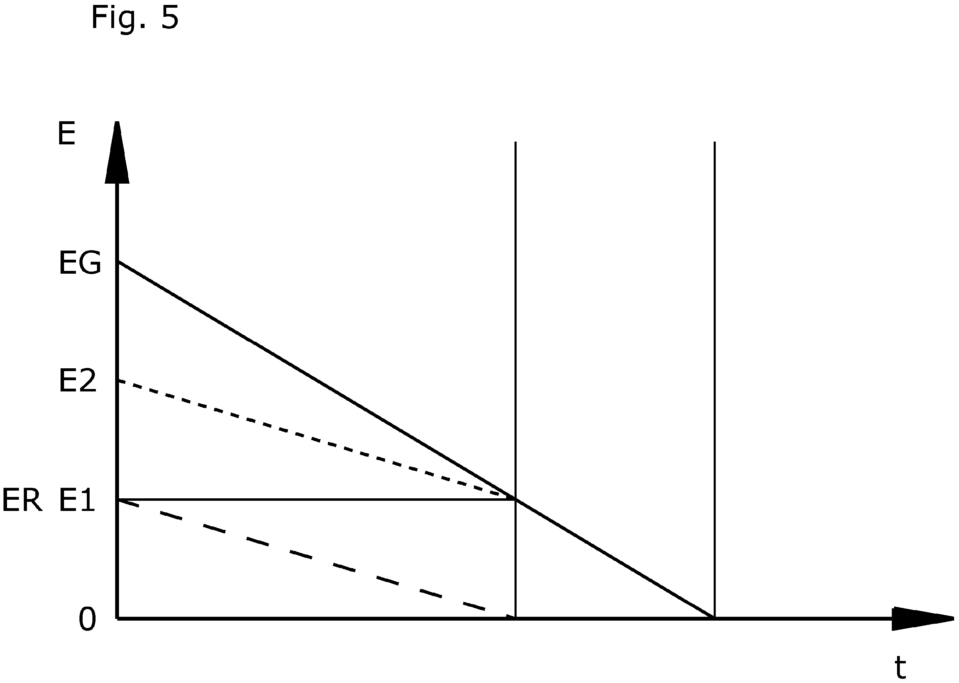

Fig. 5 skizziert einen schematischen Verlauf der Ladezustände eines erfindungsgemäßen Energiespeichers eines Geräts, wobei der Energiespeicher eine erste Speichereinheit sowie eine zweiten Speichereinheit aufweist, wobei der Energiespeicher zu Beginn seiner Verwendung eine Gesamtenergiemenge EG aufweist, welche sich aus einer ersten anfänglichen Energiemenge E1 der ersten Speichereinheit sowie aus einer zweiten anfänglichen Energiemenge E2 der zweiten Speichereinheit zusammensetzt, wobei EG=E1+E2 gilt. In einer ersten Phase wird abwechselnd der erste Energiespeicher sowie der zweite Energiespeicher belastet, so dass eine Energiemenge der ersten Speichereinheit sowie eine Energiemenge der zweiten Speichereinheit abnimmt, bis wie in diesem Beispiel gezeigt der erste Energiespeicher vollständig entladen ist und der zweite Energiespeicher eine Restenergiemenge ER aufweist. Danach wird das Gerät ausschließlich durch den zweiten Energiespeicher betrieben.

In einer erfindungsgemäßen Ausgestaltung kann die erste anfängliche Energiemenge E1 auch größer als die zweite anfängliche Energiemenge E2 sein. In einer erfindungsgemäßen Ausgestaltung kann die zweite Speichereinheit vorder ersten Speichereinheit entladen sein.

In diesem Beispiel gilt E2=2*E1 und EG=3*E1. Des Weiteren gilt, dass die erste Zeitdauer t1 gleich der ersten Zeitdauer t2 ist. Diese Werte sind aus darstellerischen Gründen gewählt und sind nicht zu einer Einschränkung des erfinderischen Gedankens heranzuziehen. Es gilt auch zu berücksichtigen, dass die die Ladezustände der Speichereinheiten beschreibenden Kurven im realen Betrieb aufgrund von abwechselndem Entladen und nicht Entladen Knicke aufweisen, welche in diesem Beispiel geglättet sind. Es ist auch nicht notwendig, dass die Kurven bis zur Entladung der ersten bzw. zweiten Speichereinheit parallel verlaufen. Die Restenergiemenge ER ist im Allgemeinen unterschiedlich zur ersten anfänglichen Energiemenge E1.

## Bezugszeichenliste

| 1 | Gerät |
|---|---|
| 10 | Gehäuse |
| 11 | Gehäusekammer |
| 12 | Messrohr |
| 20 | elektronische Mess-/Betriebsschaltung |
| 21 | Schalter |
| 30 | Energiespeicher |
| 31 | erste Speichereinheit |
| 32 | zweite Speichereinheit |
| 33 | Speicherelement |
| 34 | Speichermodul |
| 40 | elektrischer Verbraucher / Sensor |
| 41 | Spulensystem |
| 42 | Messelektrode |
| 51 | Magnetfeld |
| 52 | elektrische Spannung |
| E1 | erste anfängliche Energiemenge |
| E2 | zweite anfängliche Energiemenge |
| EG | Gesamtenergiemenge |
| ER | Restenergiemenge |
| t1 | erste Zeitdauer |
| t2 | zweite Zeitdauer |

## Patentansprüche

1. Gerät (1) umfassend:

   Mindestens einen elektrischen Verbraucher (40);
   mindestens einen austauschbaren elektrischen Energiespeicher (30);
   eine elektronische Mess-/Betriebsschaltung zum Betreiben des Verbrauchers sowie zum Steuern einer Energieverwaltung des elektronischen Geräts,
   wobei der Energiespeicher (30) zumindest eine erste Speichereinheit (31) mit einer ersten anfänglichen Energiemenge (E1) und zumindest eine zweite Speichereinheit (32) mit einer zweiten anfänglichen Energiemenge (E2) aufweist,
   wobei die elektronische Mess-/Betriebsschaltung (20) dazu eingerichtet ist, die erste Speichereinheit (31) bzw. die zweite Speichereinheit (32) mittels eines Schalters (21) nach einem Algorithmus anzusteuern, wobei durch Ansteuerung der ersten Speichereinheit bzw. der zweiten Speichereinheit eine Energieversorgung des Geräts durch die jeweilige Speichereinheit sichergestellt ist,
   **dadurch gekennzeichnet, dass**
   die elektronische Mess-/Betriebsschaltung (20) dazu eingerichtet ist, ohne Ladezustandsmessung durch abwechselndes Ansteuern der ersten Speichereinheit bzw. der zweiten Speichereinheit sicherzustellen, dass bei einer geringen Restenergiemenge oder aufgebrauchter Energiemenge einer Speichereinheit die jeweils andere Speichereinheit eine Restenergiemenge (ER) von zumindest 10% und insbesondere mindestens 20% und bevorzugt mindestens 30% einer Gesamtenergiemenge (EG) der ersten anfänglichen Energiemenge E1 der ersten Speichereinheit (31) und der zweiten anfänglichen Energiemenge E2 der zweiten Speichereinheit (32) aufweist.

2. Gerät nach Anspruch 1,
wobei die elektronische Mess-/Betriebsschaltung (20) dazu eingerichtet ist, ein Warnsignal auszugeben sobald die Restenergiemenge einer Speichereinheit gering ist bzw. sobald die anfängliche Energiemenge einer Speichereinheit aufgebraucht ist, wobei die elektronische Mess-/Betriebsschaltung (20) bei geringer Restenergiemenge bzw. aufgebrauchter Energiemenge einer Speichereinheit dazu eingerichtet ist, die Energieversorgung des Geräts (1) durch durchgängige Verwendung der jeweils anderen Speichereinheit sicherzustellen.

3. Gerät nach Anspruch 1 oder 2,
wobei der Typ des Energiespeichers (20) ein Typ aus folgender Liste ist:

Akkumulator, Primärbatterie,
wobei die Primärbatterie insbesondere eine Alkaliprimärbatterie und bevorzugt eine Lithiumprimärbatterie ist.

4. Gerät nach einem der vorigen Ansprüche,
wobei die erste Speichereinheit (31) und die zweite Speichereinheit (32) jeweils einen oder mehrere Speicherelemente (33) eines gleichen Typs umfasst.

5. Gerät nach einem der vorigen Ansprüche,
wobei die erste Speichereinheit (31) und die zweite Speichereinheit (32) räumlich zu einem Speichermodul (34) zusammengefasst sind.

6. Gerät nach einem der vorigen Ansprüche,
wobei der Algorithmus mindestens eine erste Zeitdauer (t1) zur Ansteuerung der ersten Speichereinheit und mindestens eine zweite Zeitdauer (t2) zur Ansteuerung der zweiten Speichereinheit umfasst.

7. Gerät nach Anspruch 6,
wobei die erste Zeitdauer (t1) sowie die zweite Zeitdauer (t2) größer als 100 Millisekunden und insbesondere größer als 1 Minute und bevorzugt größer als 1 Stunde sind und/oder wobei die erste Zeitdauer (t1) sowie die zweite Zeitdauer (t2) kleiner als 3 Monate und insbesondere kleiner als 1 Monate und bevorzugt kleiner als 1 Woche ist.

8. Gerät nach Anspruch 6,
wobei die erste Zeitdauer sowie die zweite Zeitdauer größer 0.001% und insbesondere größer als 0.005 % und bevorzugt größer als 0.02% einer Gesamtlebensdauer des Energiespeichers sind und/oder wobei die erste Zeitdauer sowie die zweite Zeitdauer kleiner als 10 % und insbesondere kleiner als 5% und bevorzugt kleiner als 2% der Gesamtlebensdauer ist.

9. Gerät nach einem der Ansprüche 6 bis 8,
wobei ein erstes Verhältnis V1=E1/E2 der ersten anfänglichen Energiemenge zur zweiten anfänglichen Energiemenge größer oder gleich 1 ist, und wobei für ein zweites Verhältnis V2=t1/t2 der ersten Zeitdauer zur zweiten Zeitdauer gilt:

$$V2=V1*F$$

mit

entweder F kleiner 1 und insbesondere kleiner 0.9 und bevorzugt kleiner 0.8,
oder F größer 1 und insbesondere größer 1.1 und bevorzugt größer 1.2,
wobei die elektronische Mess-/Betriebsschaltung (20) dazu eingerichtet ist, die erste Speichereinheit (31) und die zweite Speichereinheit (32) abwechselnd anzusteuern.

10. Gerät nach einem der Ansprüche 6 bis 8,
wobei ein erstes Verhältnis V1=E1/E2 der ersten anfänglichen Energiemenge zur zweiten anfänglichen Energiemenge größer oder gleich 1 ist, wobei die elektronische Mess-/Betriebsschaltung dazu eingerichtet ist, die Abfolge der Ansteuerung der ersten Speichereinheit sowie der zweiten Speichereinheit im Wesentlichen zufällig auszugestalten, wobei die Ansteuerung der ersten Speichereinheit eine durchschnittliche erste Ansteuerungszeit td1 aufweist, und wobei die Ansteuerung der zweiten Speichereinheit eine durchschnittliche zweite Ansteuerungszeit td2 aufweist, wobei für ein drittes Verhältnis V3 der durchschnittlichen ersten Ansteuerungszeit td1 zur durchschnittlichen zweiten Ansteuerungszeit td2 gilt: V3=V1*F mit
entweder F kleiner 1 und insbesondere kleiner 0.9 und bevorzugt kleiner 0.8,
oder F größer 1 und insbesondere größer 1.1 und bevorzugt größer 1.2.

**11.** Gerät nach einem der vorigen Ansprüche,
wobei das Gerät (1) ein Feldgerät der Mess- und Automatisierungstechnik ist,
wobei der mindestens eine elektrische Verbraucher (40) ein Sensor zum Erfassen mindestens einer Messgröße ist,
wobei das Gerät des Weiteren umfasst:
ein Gehäuse (10) mit mindestens einer Gehäusekammer (11), wobei der Energiespeicher (30) sowie die elektronische Mess-/Betriebsschaltung (20) in der Gehäusekammer angeordnet sind, wobei die elektronische Mess-/Betriebsschaltung (20) zum Betreiben des Sensors (40) sowie zur Verarbeitung eines vom Sensor ausgegebenen, die Messgröße repräsentierendes Messsignals eingerichtet ist.

**12.** Gerät nach einem der vorigen Ansprüche,
wobei das Gerät (1) ein Durchflussmessgerät zur Messung der Durchflussgeschwindigkeit oder des Volumen- bzw. Massedurchflusses eines Mediums in einem Messrohr (12) nach einem der folgenden Messprinzipien ist:

Magnetisch-induktiv, Thermisch, Ultraschalllaufzeitdifferenz, Coriolis, Vortex,
wobei das Gerät das Messrohr (12) zum Führen des Mediums umfasst.

**13.** Gerät nach Anspruch 12,
wobei das magnetisch-induktive Durchflussmessgerät umfasst:

ein Magnetsystem mit mindestens einem Spulensystem (41) zum Erzeugen eines Magnetfelds (51), welches im Wesentlichen senkrecht zu einer Messrohrachse steht;
mindestens ein Paar im oder am Messrohr angeordnete Messelektroden (42), welche galvanisch oder kapazitiv mit dem Medium gekoppelt sind, wobei das Paar Messelektroden dazu eingerichtet ist, eine vom Magnetfeld im Medium induzierte durchflussabhängige elektrische Spannung (52) abzugreifen;
wobei das Magnetsystem und die Messelektroden mit der Mess-/Betriebsschaltung (20) elektronisch gekoppelt sind,
wobei die Mess-/Betriebsschaltung dazu eingerichtet ist, das Magnetsystem und die Messelektroden zu betreiben und die durch das Paar Messelektroden abgegriffene, den Durchfluss repräsentierende elektrische Spannung auszuwerten.

**14.** Gerät nach Anspruch 13,
wobei die Mess-/Betriebsschaltung dazu eingerichtet ist, das Medium für eine Durchflussmessung mit mindestens zwei aufeinanderfolgenden Magnetfeldern wechselnder Polarität zu beaufschlagen.

**Claims**

**1.** Device (1) comprising:

at least one electrical consumer (40);
at least a replaceable electrical energy storage unit (30);
an electronic measuring/operation circuit designed to operate the consumer and to control the energy management of the electronic device,
wherein the energy storage unit (30) comprises at least a first storage unit (31) with a first initial energy amount (E1) and at least a second storage unit (32) with a second initial energy amount (E2),
wherein the electronic measuring/operation circuit (20) is designed to activate the first storage unit (31) or the second storage unit (32) by means of a switch (21) according to an algorithm, wherein the first storage unit or the second storage unit is activated in a manner to ensure the supply of energy to the device by the respective storage unit,
**characterized in that**
the electronic measuring/operation circuit (20) is designed to guarantee - without measuring the state of charge and by alternately activating the first storage unit and the second storage unit - that when one storage unit has a low residual energy amount or consumed energy amount, the other storage unit has a residual energy amount (ER) of at least 10 %, particularly of at least 20 % and preferably of at least 30 % of a total energy amount (EG) of the first initial energy amount E1 of the first storage unit (31) and of the second initial energy amount E2 of the second storage unit (32).

**2.** Device as claimed in Claim 1,
wherein the electronic measuring/operation circuit (20) is designed to emit a warning signal as soon as the residual energy amount of a storage unit is low or as soon as the initial energy amount of a storage unit is used up,
wherein the electronic measuring/operation circuit (20) is designed to ensure - when the residual energy amount of a storage unit is low or when the initial energy amount of a storage unit is used up - the supply of energy to the device (1) by the consistent use of the other respective storage unit.

**3.** Device as claimed in Claim 1 or 2,
wherein the energy storage unit type (20) is a type selected from the following list:

accumulator, primary battery,
wherein the primary battery is particularly an alkaline primary battery and preferably a lithium primary battery.

4. Device as claimed in one of the previous claims, wherein the first storage unit (31) and the second storage unit (32) each comprise one or more storage elements (33) of the same type.

5. Device as claimed in one of the previous claims, wherein the first storage unit (31) and the second storage unit (32) are spatially combined to form a storage module (34).

6. Device as claimed in one of the previous claims, wherein the algorithm comprises at least a first period of time (t1) to activate the first storage unit and at least a second period of time (t2) to activate the second storage unit.

7. Device as claimed in Claim 6, wherein the first period of time (t1) and the second period of time (t2) are greater than 100 milliseconds and particularly greater than 1 minute and preferably greater than 1 hour and/or wherein the first period of time (t1) and the second period of time (t2) are less than 3 months and particularly less than 1 month and preferably less than 1 week.

8. Device as claimed in Claim 6, wherein the first period of time and the second period of time are greater than 0.001 % and particularly greater than 0.005 % and preferably greater than 0.02 % of a total lifetime of the energy storage unit and/or wherein the first period of time and the second period of time are less than 10 % and particularly less than 5 % and preferably less than 2 % of the total lifetime.

9. Device as claimed in one of the Claims 6 to 8, wherein a first ratio V1 =E1/E2 of the first initial energy amount to the second initial energy amount is greater than or equal to 1, and wherein the following formula applies for a second ratio V2 = t1/t2 of the first period of time to the second period of time:

$$V2 = V1 * F$$

with F being either less than 1 and particularly less than 0.9 and preferably less than 0.8, or F being greater than 1 and particularly greater than 1.1 and preferably greater than 1.2, wherein the electronic measuring/operation circuit (20) is designed to alternately activate the first storage unit (31) and the second storage unit (32).

10. Device as claimed in one of the Claims 6 to 8, wherein a first ratio V1 = E1/E2 of the first initial energy amount to the second initial energy amount is greater than or equal to 1, wherein the electronic measuring/operation circuit is designed to essentially design the sequence of activating the first storage unit and the second storage unit as random, wherein the activation of the first storage unit has an average first activation time td1, and the activation of the second storage unit has an average second activation time td2, wherein the following formula applies for a third ratio V3 of the first average activation time td1 to the second activation time td2:

$$V3 = V1 * F$$

with F being either less than 1 and particularly less than 0.9 and preferably less than 0.8, or with F being greater than 1 and particularly greater than 1.1 and preferably greater than 1.2.

11. Device as claimed in one of the previous claims, wherein the device (1) is a field device used in measuring and automation engineering, wherein the at least one electrical consumer (40) is a sensor designed to measure at least one measured variable, wherein the device further comprises:

a housing (10) with at least a housing chamber (11), wherein the energy storage unit (30) and the electronic measuring/operation circuit (20) are arranged in the housing chamber, wherein the electronic measuring/operation circuit (20) is designed to operate the sensor (40) and to process a measuring signal output by the sensor and representing the measured variable.

12. Device as claimed in one of the previous claims, wherein the device (1) is a flowmeter designed to measure the flow velocity or the volume or mass flow of a medium in a measuring tube (12) as claimed in one of the following measuring principles:

electromagnetic, thermal, ultrasonic transit time difference, Coriolis, vortex, wherein the device comprises the measuring tube (12) for conducting the medium.

13. Device as claimed in Claim 12, wherein the electromagnetic flowmeter comprises:

a magnetic system comprising at least a coil system (41) to generate a magnetic field (51), wherein said field is essentially perpendicular to an axis of the measuring tube;

at least one pair of measuring electrodes (42) arranged in or on the measuring tube, wherein said electrodes are coupled in a galvanic or capacitive manner with the medium, wherein the pair of measuring electrodes is designed to measure an electrical voltage (52) that depends on the flow and is induced by the magnetic field in the medium;

wherein the magnetic system and the measuring electrodes are electronically coupled to the measuring/operating circuit (20),

wherein the measuring/operating circuit is designed to operate the magnetic system and the measuring electrodes, and to evaluate the electrical voltage, representing the flow, that is measured by the pair of measuring electrodes.

14. Device as claimed in Claim 13,
wherein le measuring/operating circuit is designed to apply at least two magnetic fields, with at least two consecutive magnetic fields of alternating polarity, to the medium.

**Revendications**

1. Appareil (1) comprenant :

au moins un consommateur électrique (40) ;
au moins un accumulateur d'énergie électrique remplaçable (30) ;
un circuit électronique de mesure / d'exploitation destiné à exploiter le consommateur et à contrôler une gestion de l'énergie de l'appareil électronique,
l'accumulateur d'énergie (30) comprenant au moins une première unité d'accumulateur (31) avec une première quantité initiale d'énergie (E1) et au moins une deuxième unité d'accumulateur (32) avec une deuxième quantité initiale d'énergie (E2),
le circuit électronique de mesure / d'exploitation (20) étant conçu pour commander la première unité d'accumulateur (31) ou la deuxième unité d'accumulateur (32) au moyen d'un commutateur (21) conformément à un algorithme, la première unité d'accumulateur ou la deuxième unité d'accumulateur étant commandée de manière à assurer une alimentation en énergie de l'appareil par l'unité d'accumulateur respective,
**caractérisé en ce que**
le circuit électronique de mesure / d'exploitation (20) est conçu pour garantir, sans mesure de l'état de charge, en commandant alternativement la première unité d'accumulateur et la deuxième unité d'accumulateur, qu'en cas de faible quantité d'énergie résiduelle ou de quantité d'énergie épuisée d'une unité d'accumulateur, l'autre unité de stockage respective présente une quantité d'énergie résiduelle (ER) d'au moins 10 %, notamment d'au moins 20 % et de préférence d'au moins 30 %, d'une quantité d'énergie totale (EG) de la première quantité d'énergie initiale E1 de la première unité d'accumulateur (31) et de la deuxième quantité d'énergie initiale E2 de la deuxième unité d'accumulateur (32).

2. Appareil selon la revendication 1,
pour lequel le circuit électronique de mesure / d'exploitation (20) est conçu pour émettre un signal d'avertissement dès que la quantité d'énergie résiduelle d'une unité d'accumulateur est faible ou dès que la quantité d'énergie initiale d'une unité d'accumulateur est épuisée,
le circuit électronique de mesure et d'exploitation (20) étant conçu pour assurer-lorsque la quantité d'énergie résiduelle d'une unité d'accumulateur est faible ou lorsque la quantité d'énergie initiale d'une unité d'accumulateur est épuisée - l'alimentation en énergie de l'appareil (1) par une utilisation continue de l'autre unité d'accumulateur respective.

3. Appareil selon la revendication 1 ou 2,
pour lequel le type d'accumulateur d'énergie (20) est un type sélectionné dans la liste suivante :

accumulateur, batterie primaire,
pour lequel la batterie primaire est notamment une batterie primaire alcaline et de préférence une batterie primaire au lithium.

4. Appareil selon l'une des revendications précédentes,
pour lequel la première unité d'accumulateur (31) et la deuxième unité d'accumulateur (32) comprennent chacune un ou plusieurs éléments d'accumulateur (33) de même type.

5. Appareil selon l'une des revendications précédentes,
pour lequel la première unité d'accumulateur (31) et la deuxième unité d'accumulateur (32) sont combinées spatialement pour former un module d'accumulateur (34).

6. Appareil selon l'une des revendications précédentes,
pour lequel l'algorithme comprend au moins une première durée (t1) pour commander la première unité d'accumulateur et au moins une deuxième durée (t2) pour commander la deuxième unité d'accumulateur.

**7.** Appareil selon la revendication 6, pour lequel la première durée (t1) ainsi que la deuxième durée (t2) sont supérieures à 100 millisecondes et notamment supérieures à 1 minute et de préférence supérieures à 1 heure et/ou pour lequel la première durée (t1) ainsi que la deuxième durée (t2) sont inférieures à 3 mois et notamment inférieures à 1 mois et de préférence inférieures à 1 semaine.

**8.** Appareil selon la revendication 6, pour lequel la première durée ainsi que la deuxième durée sont supérieures à 0,001 % et notamment supérieures à 0,005 % et de préférence supérieures à 0,02 % d'une durée de vie totale de l'accumulateur d'énergie et/ou pour lequel la première durée ainsi que la deuxième durée sont inférieures à 10 % et notamment inférieures à 5 % et de préférence inférieures à 2 % de la durée de vie totale.

**9.** Appareil selon l'une des revendications 6 à 8, pour lequel un premier rapport $V1 = E1/E2$ entre la première quantité d'énergie initiale et la deuxième quantité d'énergie initiale est supérieur ou égal à 1, et la formule suivante s'appliquant pour un deuxième rapport $V2 = t1/t2$ entre la première durée et la deuxième durée :

$$V2 = V1*F$$

F étant inférieur à 1 et notamment inférieur à 0,9 et de préférence inférieur à 0,8, ou F étant supérieur à 1 et notamment supérieur à 1,1 et de préférence supérieur à 1,2, le circuit électronique de mesure et d'exploitation (20) étant conçu pour commander alternativement la première unité d'accumulateur (31) et la deuxième unité d'accumulateur (32).

**10.** Appareil selon l'une des revendications 6 à 8, pour lequel un premier rapport $V1 = E1/E2$ entre la première quantité d'énergie initiale et la deuxième quantité d'énergie initiale est supérieur ou égal à 1, le circuit électronique de mesure / d'exploitation étant conçu pour rendre pour l'essentiel aléatoire la séquence de commande de la première unité d'accumulateur ainsi que de la deuxième unité d'accumulateur, la commande de la première unité d'accumulateur présentant un premier temps de commande moyen td1, et la commande de la deuxième unité d'accumulateur présentant un deuxième temps de commande moyen td2, la formule suivante s'appliquant pour un troisième rapport V3 entre le premier temps de commande moyen td1 et le deuxième temps de commande moyen td2 :

$$V3 = V1*F$$

F étant inférieur à 1 et notamment inférieur à 0,9 et de préférence inférieur à 0,8, ou F étant supérieur à 1 et notamment supérieur à 1,1 et de préférence supérieur à 1,2.

**11.** Appareil selon l'une des revendications précédentes, pour lequel l'appareil (1) est un appareil de terrain de la technique de mesure et d'automatisation, pour lequel l'au moins un consommateur électrique (40) est un capteur destiné à la mesure d'une grandeur de mesure, l'appareil comprenant en outre :

un boîtier (10) avec au moins une chambre de boîtier (11), l'accumulateur d'énergie (30) et le circuit électronique de mesure / d'exploitation (20) étant disposés dans la chambre de boîtier, le circuit électronique de mesure / d'exploitation (20) étant conçu pour l'exploitation du capteur (40) et pour le traitement d'un signal de mesure émis par le capteur et représentant la grandeur de mesure.

**12.** Appareil selon l'une des revendications précédentes, pour lequel l'appareil (1) est un débitmètre destiné à mesurer la vitesse d'écoulement ou le débit volumique / massique d'un produit dans un tube de mesure (12) selon l'un des principes de mesure suivants :

magnéto-inductif, thermique, différence de temps de transit des ultrasons, Coriolis, vortex, l'appareil comprenant le tube de mesure (12) destiné au guidage du produit.

**13.** Appareil selon la revendication 12, pour lequel le débitmètre magnéto-inductif comprend :

un système magnétique comprenant au moins un système de bobines (41) pour générer un champ magnétique (51), lequel champ est pour l'essentiel perpendiculaire à un axe de tube de mesure ; au moins une paire d'électrodes de mesure (42) disposées dans ou sur le tube de mesure, lesquelles électrodes sont couplées de manière galvanique ou capacitive au produit, la paire d'électrodes de mesure étant conçue pour prélever une tension électrique (52) dépendant du débit et induite par le champ magnétique dans le produit ;
le système magnétique et les électrodes de mesure étant couplés électroniquement au circuit de mesure / d'exploitation (20),
le circuit de mesure / d'exploitation étant conçu pour exploiter le système magnétique et les électrodes de mesure, ainsi que pour évaluer la tension électrique, représentant le débit, prélevée par la paire d'électrodes de mesure.

14. Appareil selon la revendication 13,
pour lequel le circuit de mesure / d'exploitation est conçu pour appliquer au moins deux champs magnétiques successifs de polarité alternée au produit pour une mesure de débit.

Fig. 1

1

10

11

30

20

21

31

32

40

EP 3 602 726 B1

# Fig. 2

EP 3 602 726 B1

Fig. 3

EP 3 602 726 B1

Fig. 4

EP 3 602 726 B1

Fig. 5

EP 3 602 726 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015103580 A1
- DE 102010003995 A1